# EUROPEAN PATENT SPECIFICATION

(11) **EP 3 375 233 B1**
(45) Date of publication and mention of the grant of the patent: **05.02.2020**
(21) Application number: 15775132.2
(22) Date of filing: 24.09.2015
(51) Int. Cl.: H04W 72/04, H04L 1/18

(54) **TECHNIQUE FOR DOWNLINK CONTROL**
DOWNLINK-STEUERUNGSTECHNIK
TECHNIQUE DE COMMANDE DE LIAISON DESCENDANTE

(43) Date of publication of application: 19.09.2018
(73) Proprietor: Telefonaktiebolaget LM Ericsson (PUBL), 164 83 Stockholm (SE)
(72) Inventor: FRÖBERG OLSSON, Jonas, 590 74 Ljungsbro (SE); ERIKSSON, Erik, 585 93 Linköping (SE); FRENGER, Pål, 583 34 Linköping (SE); HESSLER, Martin, 587 58 Linköping (SE)
(74) Representative: Zacco Sweden AB
(86) International application number: PCT/EP2015/072032
(87) International publication number: WO 2017/050383

(56) References cited:
- US-A1- 2013 114 532
- ALCATEL-LUCENT ET AL: "DCI Overhead Reduction for CA", 3GPP DRAFT; R1-112797 DCI OVERHEAD REDUCTION FOR CA - R1-112406 REV, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 26 August 2011 (2011-08-26), XP050537942, [retrieved on 2011-08-26]
- "3 Generation Partnership Project; Technical Specification Group Radio Access Network; Evolved Universal Terrestrial Radio Access (E-UTRA); Multiplexing and channel coding (Release 12)", 3GPP STANDARD; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.5.0, 24 June 2015 (2015-06-24), pages 1-94, XP050965904, [retrieved on 2015-06-24]
- SAMSUNG: "Compact DCI Formats", 3GPP DRAFT; R1-154097 DCI FORMATS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001467, Retrieved from the Internet: URL:http://www.3gpp.org/ftp/Meetings_3GPP_ SYNC/RAN1/Docs/ [retrieved on 2015-08-23]
- MEDIATEK INC: "PHICH functionality support based on compact DCI", 3GPP DRAFT; R1-154715 PHICH FUNCTIONALITY SUPPORT BASED ON COMPACT DCI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Beijing, China; 20150824 - 20150828 23 August 2015 (2015-08-23), XP051001931, Retrieved from the Internet: URL:http://www.3gpp.org/ftp/Meetings_3GPP_ SYNC/RAN1/Docs/ [retrieved on 2015-08-23]

## Description

### Technical Field

The present disclosure generally relates to a technique for controlling radio communication between a radio access network and a user equipment. More specifically, and without limitation, methods and devices are provided for signaling control information on a downlink control channel.

### Background

As Long Term Evolution (LTE) evolves under the Third Generation Partnership Project (3GPP), the number of formats specified for control information on the Physical Downlink Control Channel (PDCCH) or the enhanced PDCCH (ePDCCH) increases significantly. Release 12 of LTE specifies a plurality of 13 different Downlink Control Information (DCI) formats for controlling both uplink data transmission and downlink data transmission. Supporting the plurality of DCI formats require tedious testing and implementation at the side of the radio access networks and the user equipments (UEs). As the LTE standard evolves with further transmission modes being introduced, corresponding further DCI formats need to be defined. For this reason, the number of DCI formats has been steadily increasing and may be expected to increase further, e.g., since earlier DCI formats are not removed to maintain backward compatibility.

The DCI gives each of the UEs details of an assigned radio transmission such as a number of resource blocks, a resource allocation type, a modulation scheme, a transport block, a redundancy version, a coding rate, etc. The DCI formats are of fixed size. That is, a format can have different sizes depending on how the UE is configured, but for every radio transmission assigned to the UE, the DCI has the fixed size.

Consequently, for every assignment of an uplink or downlink radio transmission, fixed-size control information occupies the downlink control channel although only a small portion of DCI is different from previously transmitted control information. The document ALCATEL-LUCENT ET AL. "DCI Overhead Reduction for CA", 3GPP TSG RAN WG1 Meeting #66, R1-112406, XP50537942, 26.08.2011, discloses possible methods for reducing DCI payload size.

### Summary

Accordingly, there is a need for a technique for signaling downlink control information more efficiently.

The invention is defined by the subject-matter of the independent claims. Particular embodiments of the invention are set out in the dependent claims.

As to one aspect, a method of sending downlink control information (DCI) from a radio access network (RAN) to a user equipment (UE) is provided. The method comprises or triggers a steps of sending a first control element including first DCI to the UE, wherein the first DCI includes values specifying a set of transmission parameters; a step of sending a second control element including second DCI to the UE, wherein the second DCI includes values specifying a subset of the set; and a step of communicating with the UE according to the set of transmission parameters, wherein the values included in the first DCI specify the transmission parameters not in the subset, and wherein the values included in the second DCI specify the transmission parameters in the subset.

The second DCI may be limited to those transmission parameters that have changed since the first DCI was sent and/or that are to be changed, e.g., in an upcoming transmission time interval. At least in some embodiments, an overhead of control signaling on the downlink control channel can be reduced. Alternatively or in addition, more detailed DCI and/or more frequently updated DCI can be sent to the UE, e.g., without increasing a capacity of a downlink control channel. Alternatively or in addition, more UEs can be provided with UE-specific DCI, e.g., using a given capacity of the downlink control channel.

The subset may be different from the set. The subset may be a proper subset (also referred to as a strict subset) of the set.

The subset of the transmission parameters may consist of less transmission parameters than those constituting the set of transmission parameters. All transmission parameters in the subset may be included in the set.

The second control element may include additional control information, e.g., for the communication. By way of example, the second control element may include values specifying one or more transmission parameters in addition to the transmission parameters included in the set.

The communication according to the transmission parameters may be based on additional parameter values and/or configuration values, e.g., additional control information, additional transmission parameters and/or network parameters.

The first DCI and the second DCI may be sent over the same physical channel or over different physical channels. The same channel or the different channels may include a control channel and/or a data channel. E.g., all combinations of physical control channel and physical data channel can be used for signaling the first DCI and the second DCI.

The first DCI included in the first control element may be a complete DCI. The first DCI may fulfill a standardized DCI format, e.g., 3GPP formats 0, 1, 1A, 1B, 1C, 1D, 2, 2A, 2B, 2C, 2D, 3, 3A, 4 or 5. The second DCI of the second control element may also be referred to as an incomplete DCI or a differential DCI. The second DCI may be generated, e.g., in the radio access network, based on the complete first DCI as sent and a complete second DCI that is not sent.

The second DCI (e.g., as sent) may be generated based on the complete second DCI (e.g., as available only in the radio access network) by excluding those transmission parameters the values of which are unchanged, identical and/or similar in the complete first DCI. Alternatively or in addition, the second DCI (e.g., as sent) may be generated based on the complete second DCI by singling out those transmission parameters the values of which are changed, different and/or not similar in the complete first DCI.

The first DCI and/or the second DCI may encompass control information signaled, or to be signaled, on a downlink control channel. The first DCI, the second DCI and/or the transmission parameters may relate to an uplink transmission and/or a downlink transmission. The communication may relate to the uplink transmission and/or the downlink transmission. The expression "uplink transmission" may encompass a transmission from the UE to the RAN (e.g., a base station of the RAN). The expression "downlink transmission" may encompass a transmission from the RAN (e.g., a base station of the RAN) to the UE.

The first control element may be sent in a first packet data unit (PDU). The second control element may be sent in a second PDU, e.g., after the first PDU or simultaneously with the first PDU. The first PDU and/or the second PDU may be a Medium Access Control (MAC) PDU.

The transmission parameters in the set may be initialized according to the values included in the first DCI. Sending the first DCI may trigger or may be associated with initializing the transmission parameters at the RAN. Alternatively or in addition, receiving the first DCI may trigger or may be associated with initializing the transmission parameters at the UE. The first control element may be indicative of a time when to initialize the transmission parameters.

The transmission parameters in the subset may be changed according to the values included in the second DCI. The second control element may be indicative of the transmission parameters to be changed. Sending the second DCI may trigger or may be associated with changing the transmission parameters in the subset at the RAN. Alternatively or in addition, receiving the second DCI may trigger or may be associated with changing the transmission parameters in the subset at the UE. The second control element may be indicative of a time when to change the transmission parameters in the subset.

The first DCI may be applied to the communication starting from a first transmission time interval (TTI). The second DCI may be applied to the communication starting from a second TTI. The second TTI may be later than (e.g., subsequent to) the first TTI.

The first TTI may be specified by the first control element. Alternatively or in addition, the second TTI may be specified by the second control element. One TTI may be in the range of 0.1 ms to 10 ms, e.g., 1 ms. E.g., one TTI may correspond to one subframe (e.g., one LTE subframe).

The values included in the first DCI for the transmission parameters that are not in the subset may be applied to the communication until a further first DCI including values specifying the set of the transmission parameters is sent and/or until a time indicated by a further first control element including the further first DCI.

The values included in the first DCI for the transmission parameters that are in the subset may be applied to the communication until the second DCI including values specifying the subset of the transmission parameters is sent and/or until a time indicated by the second control element including the second DCI.

The values included in the second DCI for the transmission parameters that are in the subset may be applied to the communication until a further first DCI including values specifying the set of the transmission parameters is sent and/or until a time indicated by a further first control element including the further first DCI. Alternatively or in addition, the values included in the second DCI for the transmission parameters that are in the subset may be applied to the communication until a further second DCI including values specifying the subset of the transmission parameters is sent and/or until a time indicated by a further second control element including the further second DCI.

The values included in the second DCI for the transmission parameters that are in the subset may be applied to the communication in one or more TTIs. The one or more TTIs may be indicated by the second control element. The values included in the second DCI may specify the transmission parameters that are in the subset for a single TTI or for a certain group of TTIs. Before and/or after the single TTI or the group of TTIs, the values included in the first DCI may be applied to the communication. The single TTI may be equal to the second TTI, and/or a beginning of the group of TTIs may be specified by the second TTI.

The first DCI and/or the second DCI may be indicative of one or more HARQ processes among a plurality of HARQ processes. The plurality of HARQ processes may be specific for the UE. The plurality of HARQ processes may be performed and/or maintained by a physical layer at the RAN. A corresponding plurality of HARQ processes may be performed and/or maintained by a physical layer at the UE.

The first DCI and/or the second DCI may include one or more HARQ identifiers. Each of the HARQ identifiers may uniquely identify one HARQ process among the plurality of HARQ processes. Alternatively or in addition, the first DCI may relate to the plurality of HARQ processes for the UE.

The values included in the second DCI may specify the transmission parameters in the subset in relation to the one or more HARQ processes indicated by the second DCI. Other HARQ processes may further be performed or maintained for the UE, e.g., according to the first DCI. The transmission parameters may be replaced only in relation to the one or more HARQ process indicated by the second DCI. The transmission parameters may be maintained in relation to the other HARQ processes. The second DCI may further include a differential indicator. The differential indicator may be indicative of whether the second DCI relates to a re-transmission or a new transmission, e.g., for a specifically indicated HARQ process. A portion of the differential indicator may be indicative of a redundancy version (RV), e.g., in case of the re-transmission. The same portion of the differential indicator may be indicative of a modulation and/or coding scheme (MCS), e.g., in case of the new transmission.

The step of communicating may include decoding and/or demodulating a data block received from the UE according to the set of transmission parameters. At least for the step of communicating, the values included in the first DCI may specify those transmission parameters that are not in the subset. The values included in the second DCI may specify those transmission parameters that are in the subset.

Alternatively or in addition, the step of communicating may further include encoding and/or modulating a data block to be sent to the UE according to the set of transmission parameters. At least for the step of communicating, the values included in the first DCI may specify those transmission parameters that are not in the subset. The values included in the second DCI may specify those transmission parameters that are in the subset.

As to another aspect, a method of receiving downlink control information (DCI) from a radio access network (RAN) at a user equipment (UE) is provided. The method comprises or triggers a step of receiving a first control element including first DCI from the RAN, wherein the first DCI includes values specifying a set of transmission parameters; a step of receiving a second control element including second DCI from the RAN, wherein the second DCI includes values specifying a subset of the set; and a step of communicating with the RAN according to the set of transmission parameters, wherein the values included in the first DCI specify the transmission parameters not in the subset, and wherein the values included in the second DCI specify the transmission parameters in the subset.

The method may further include one or more steps corresponding to any of the steps of above method aspect.

As to a further aspect, a computer program product is provided. The computer program product comprises program code portions for performing any one of the steps of the method aspects disclosed herein when the computer program product is executed by one or more computing devices. The computer program product may be stored on a computer-readable recording medium. The computer program product may also be provided for download via a data network, e.g., the RAN and/or the Internet.

As to a hardware aspect, a device for sending downlink control information (DCI) from a radio access network (RAN) to a user equipment (UE) is provided. The device is configured to perform or trigger a step of sending a first control element including first DCI to the UE, wherein the first DCI includes values specifying a set of transmission parameters; a step of sending a second control element including second DCI to the UE, wherein the second DCI includes values specifying a subset of the set; and a step of communicating with the UE according to the set of transmission parameters, wherein the values included in the first DCI specify the transmission parameters not in the subset, and wherein the values included in the second DCI specify the transmission parameters in the subset.

As to a further aspect, a base station for sending downlink control information (DCI) from a radio access network (RAN) to a user equipment (UE) is provided. The base station may comprise a device according to above hardware aspect. Alternatively or in addition, the base station comprises a first send module for sending a first control element including first DCI to the UE, wherein the first DCI includes values specifying a set of transmission parameters; a second send module for sending a second control element including second DCI to the UE, wherein the second DCI includes values specifying a subset of the set; and a communicate module for communicating with the UE according to the set of transmission parameters, wherein the values included in the first DCI specify the transmission parameters not in the subset, and wherein the values included in the second DCI specify the transmission parameters in the subset.

The base station may be wirelessly connected or connectable with the UE.

As to another hardware aspect, a device for receiving downlink control information (DCI) from a radio access network (RAN) at a user equipment (UE) is provided. The device is configured to perform or trigger a step of receiving a first control element including first DCI from the RAN, wherein the first DCI includes values specifying a set of transmission parameters; a step of receiving a second control element including second DCI from the RAN, wherein the second DCI includes values specifying a subset of the set; and a step of communicating with the RAN according to the set of transmission parameters, wherein the values included in the first DCI specify the transmission parameters not in the subset, and wherein the values included in the second DCI specify the transmission parameters in the subset.

As to a still further aspect, a user equipment (UE) for receiving downlink control information (DCI) from a radio access network (RAN) is provided. The UE may comprise a device according to above hardware aspect. Alternatively or in addition, the UE comprises a first receive module for receiving a first control element including first DCI from the RAN, wherein the first DCI includes values specifying a set of transmission parameters; a second receive module for receiving a second control element including second DCI from the RAN, wherein the second DCI includes values specifying a subset of the set; and a communicate module for communicating with the RAN according to the set of transmission parameters, wherein the values included in the first DCI specify the transmission parameters not in the subset, and wherein the values included in the second DCI specify the transmission parameters in the subset.

The UE may be wirelessly connected or connectable with the RAN, e.g., via a base station or multiple base stations including the base station, e.g., as a master base station. The UE may encompass a mobile terminal or a stationary terminal. The UE may encompass a personal device or a device operative without user interaction and/or without user interface (e.g., for machine-to-machine communication).

The devices, the base station and/or the UE may further include any feature disclosed in the context of the method aspects. Particularly, any one of the modules or units (e.g., a dedicated module or unit) may be configured to perform one or more of the steps of any of the method aspects.

### Brief Description of the Drawings

Further details of embodiments of the technique are described with reference to the enclosed drawings, wherein:
- Fig. 1: schematically illustrates an example network environment for implementing the technique;
- Fig. 2: shows a schematic block diagram of a device for sending downlink control information;
- Fig. 3: shows a schematic block diagram of a device for receiving downlink control information;
- Fig. 4: shows a flowchart for a method of sending downlink control information;
- Fig. 5: shows a flowchart for a method of receiving downlink control information;
- Fig. 6: schematically illustrates an embodiment of a data structure for a differential downlink control information; and
- Fig. 7: schematically illustrates a control signaling including a complete downlink control information and the differential downlink control information.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a Long Term Evolution (LTE) implementation, it is readily apparent that the technique described herein may also be implemented in any other wireless communication network, including a Wireless Local Area Network (WLAN) according to the standard family IEEE 802.11 (e.g., IEEE 802.11a, g, n or ac), a Worldwide Interoperability for Microwave Access (WiMAX) according to the standard family IEEE 802.16 and/or a Low-Rate Wireless Personal Area Network (LR-WPAN) according to IEEE 802.15.4.

Moreover, those skilled in the art will appreciate that the functions, steps and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising a computer processor and memory coupled to the processor, wherein the memory is encoded with one or more programs that may perform the services, functions, steps and implement the units disclosed herein.

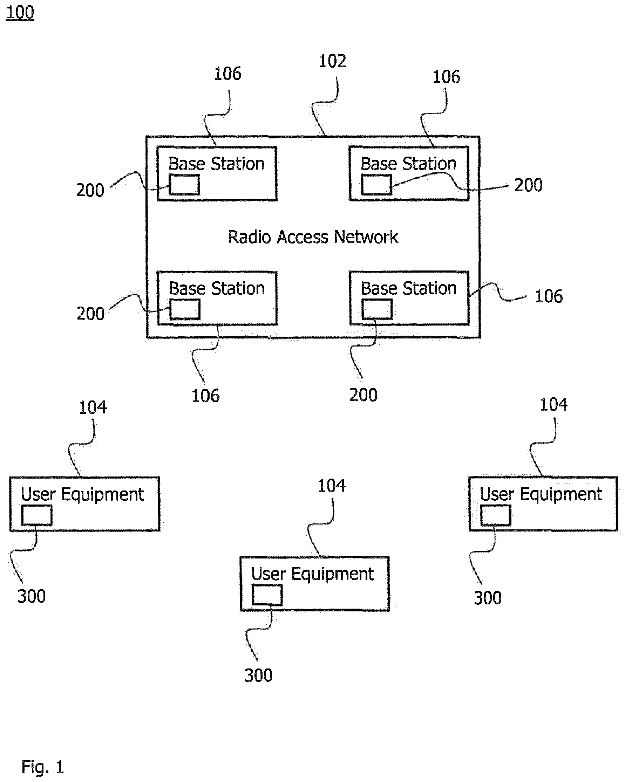

Fig. 1 schematically illustrates a wireless (e.g., optical, near-field and/or radio) communications system 100 as an exemplary environment for implementing the technique. The wireless communications system 100 includes a radio access network (RAN) 102 and a varying number of user equipments (UEs) 104.

In an embodiment, each of the UEs 104 is in a Radio Resource Control (RRC) idle state or an RRC connected state relative to the RAN 102 at a certain point in time. The RAN 102 includes a plurality of base stations 106, e.g., enhanced Node Bs (eNBs) in an LTE implementation. In the RRC connected state, the UE 104 is connected, e.g., according to a Data Link Layer (DLL) protocol, with one of the base stations 106 or at least two base stations, e.g., according to LTE Dual Connectivity. The DLL comprises a Packet Data Convergence Protocol (PDCP) sublayer, a Radio Link Control (RLC) sublayer and a Media Access Control (MAC) sublayer.

A device 200 for sending downlink control information (DCI) may be associated with the RAN 102. E.g., some or each of the base stations 106 includes the device 200. The device 200 may be implemented at the DLL or a physical layer of the RAN 102.

A device 300 for receiving DCI may be associated with the UE 104. E.g., the device 300 is implemented at some or each of the UEs 104, e.g., in the DLL or the physical layer of the UE 104.

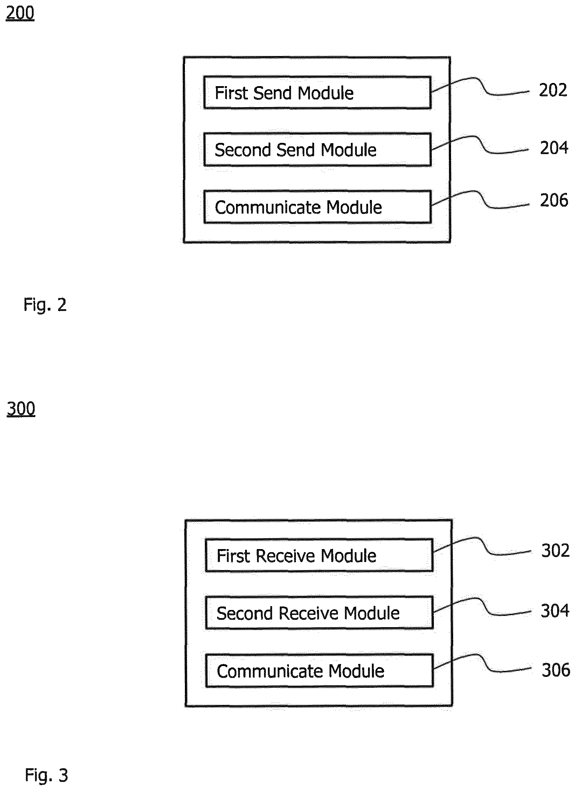

Fig. 2 shows a schematic block diagram of a device 200 for sending DCI from a RAN to a UE. The device 200 comprises a first send module 202 for sending a first control element to the UE and a second send module 204 for sending a second control element to the UE. The send modules 202 and 204 may be implemented by a single send module.

The first control element and second control element include first DCI and second DCI, respectively. The device 200 further comprises a communicate module 206 for communicating with the UE based on both the first DCI and the second DCI.

Fig. 3 shows a schematic block diagram of a device 300 for receiving DCI from a RAN at a UE. The device 300 comprises a first receive module 302 for receiving a first control element from the RAN and a second receive module 304 for receiving a second control element from the RAN. The receive modules 302 and 304 may be implemented by a single receive module.

The first control element and second control element include first DCI and second DCI, respectively. The device 300 further comprises a communicate module 306 for communicating with the RAN based on both the first DCI and the second DCI.

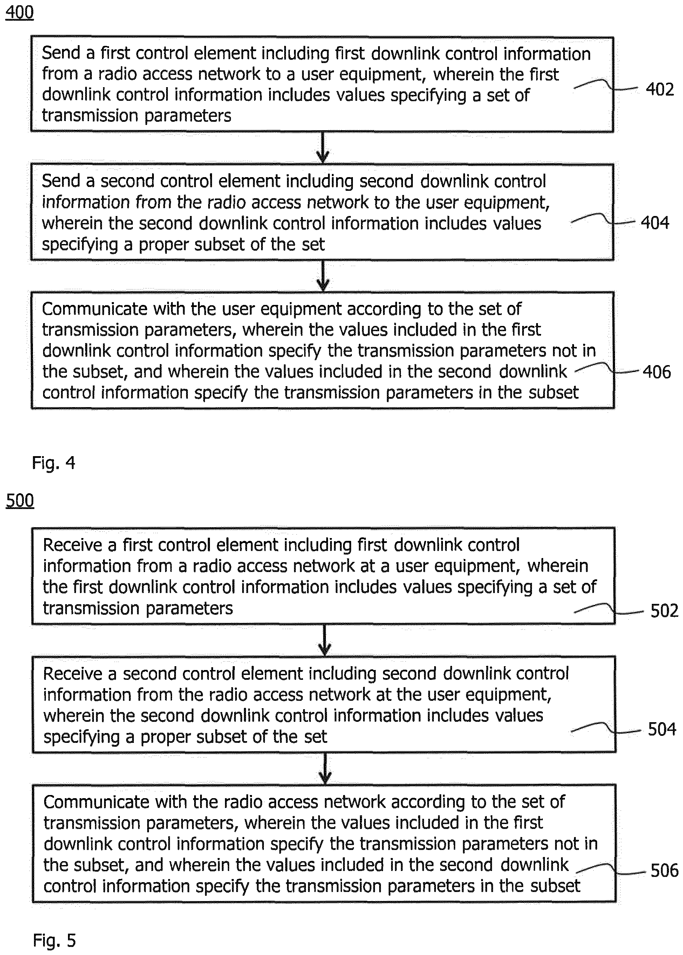

Fig. 4 shows a block diagram for a method 400 of sending DCI from a RAN to a UE. First DCI and second DCI are sent to the UE in steps 402 and 404, respectively. Data is received from and/or sent to the UE according to a combination of the first DCI and the second DCI in a communicating step 406.

For clarity and not limitation, the description distinguishes between transmission parameters and values for the transmission parameters. The first DCI specifies values for a set of transmission parameters. The set of transmission parameters may be a set (e.g., a minimum set) of transmission parameters required or used for data communication, e.g., the communication 406.

The second DCI specifies values for a strict (or proper) subset of the set. For the communication 406, values for the set of transmission parameters are specified by the values of the second DCI for the transmission parameters of the strict subset and by the values of the first DCI for the other transmission parameters.

The other transmission parameters may be those transmission parameters out of the set, which are not in the strict subset. The other transmission parameters are collectively referred to as a complementary subset. The complementary subset of transmission parameters is complementary to the subset of the second DCI within the set of the first DCI. In other words, the set of required or used transmission parameters is partitioned into the strict subset and the complementary subset. The first DCI and the second DCI uniquely specify the partition.

Fig. 5 shows a block diagram for a method 500 of receiving DCI from a RAN at a UE. First DCI and second DCI are received from the RAN in steps 502 and 504, respectively. Data is received from and/or sent to the RAN according to a combination of the first DCI and the second DCI in a communicating step 506.

The second DCI specifies values for a strict subset of the set. For the communication 506, values for the set of transmission parameters are obtained from the values of the received second DCI for specifying the transmission parameters of the strict subset and from the values of the received first DCI for specifying the other transmission parameters of the complementary subset.

The methods 400 and 500 may be performed by the devices 200 and 300, respectively. The modules 202 to 206 may implement the steps 402 to 406, respectively. The modules 302 to 306 may implement the steps 502 to 506, respectively. The devices 200 and 300 may be implemented in the RAN 102 and the UE 104, respectively, of the wireless communications system 100.

Upon or after signaling (i.e., sending and receiving) the first DCI, a communication may be performed according to the values included in the first DCI. Upon or after signaling the second DCI, the values included in the second DCI are effective to the communication.

Optionally, the values included in the second DCI are effective to the communication for a limited number of one or more Transmission Time Intervals (TTIs), or the values included in the second DCI may be associated with a validity time.

As a first example, the values of the second DCI are effective for N transmissions, by way of example in TTI=n₀, TTI=n₁, ..., and TTI=n_{(N-1)}. Any index sequence nᵢ may be implemented, wherein n₀ is the TTI in which the second DCI is signaled or a start TTI specified in second DCI.

As a second example, the values of the second DCI are effective for TTIs up to TTI=N, wherein N is a specification (e.g., a standard specification), a configuration parameter (e.g., locally stored in the devices 200 and 300) or one of the transmission parameter (e.g., specified in the first DCI or the second DCI).

After the limited number of TTIs or upon expiry of the validity time, the transmission parameters may be reset to the values included in the first DCI. Applying the values included in the second DCI may further be terminated upon signaling a further first DCI and/or upon signaling a further second DCI.

The first DCI and the second DCI may be sent and received over the same physical downlink channel or over different physical downlink channels. Below four implementations of the one or more channels used for signaling DCI are implementable with any other embodiment.

In a first implementation, the first DCI is sent (in the step 402) and received (in the step 502) over a physical data channel, and the second DCI is sent (in the step 404) and received (in the step 504) over a physical control channel. The first implementation may be used, e.g., if the first DCI specifies the complete set of transmission parameters and the second DCI only updates some of the transmission parameters.

In a second implementation, the first DCI is sent (in the step 402) and received (in the step 502) over a physical control channel, and the second DCI is sent (in the step 404) and received (in the step 504) over a physical data channel. The second implementation may be used, e.g., for backward compatibility. By way of example, the first DCI only specifies backward-compatible (e.g., "legacy") transmission parameters. E.g., the backward-compatible transmission parameters may be limited to parameters defined by a narrower or earlier standard. The second DCI may specify (e.g., "advanced") transmission parameters that are not backward-compatible with the narrower or earlier standard. Alternatively or in addition, the DCI formats on the physical control channel may be limited to basic DCI formats and/or a number of DCI formats on the physical control channel may be limited, e.g., even after more advanced transmission formats and/or transmission modes are introduced.

In a third implementation, each of the first DCI and the second DCI is sent (in the steps 402 and 404) and received (in the steps 502 and 504) over a physical data channel. The same or different physical data channels may be used for the first DCI and the second DCI.

In a fourth implementation, each of the first DCI and the second DCI is sent (in the steps 402 and 404) and received (in the steps 502 and 504) over a physical control channel. The same or different physical control channels may be used for the first DCI and the second DCI.

In the wireless communications system 100, the format in which the data is communicated between network nodes, e.g., the base station 102 and the UE 104, is sent as the first DCI in a specified (e.g., standardized) way. The receiving node (e.g., the UE 102 in an LTE network) decodes the first DCI that contains the transmission parameters describing a transport format of the transmitted data or the data to be transmitted. The transmission parameters may include at least one of an allocation (e.g., specifying radio resources on which the communicated data is located, e.g., in terms of time and/or frequency), a number of layers (e.g., specifying Multiple Input Multiple Output streams used for the communication), a number of transport blocks, a Modulation and Coding Scheme (MCS) for each of the transport blocks, a Hybrid Automatic Repeat-reQuest (HARQ) process indicator, a New Data Indicator (NDI) indicative of whether the transmission is a re-transmission or a new transmission, and a Redundancy Version Indicator (RVI) indicative of how to combine a new transmission with one or more re-transmissions.

In LTE communications networks 100, the first DCI and the second DCI are sent on a Physical Downlink Channel (PDCCH) or an enhanced PDCCH (ePDCCH) using a variety of DCI formats (e.g., according to standard document 3GPP TS 36.212, V12.5.0, Sect. 5.3.3). The DCI formats are specific to different operating modes of the UE 104. For example, in an LTE random access procedure, the eNB (as the base station) 106 sends a random access response to the UE 104 using DCI format 1A. The eNB 106 uses the DCI format 1A, since this is known to all UEs 104 and the eNB 106 does not know the actual capabilities of the UE 104 when sending the random access response. Later in the call setup procedure, the eNB 106 learn the capabilities of the UE 104 and uses a more advanced DCI format.

In one embodiment, the UE 104 receives values for the set of transmission parameters in the first DCI transmitted on a physical control channel. The values of the transmission parameters indicate a first assignment assigning a transmission on a first physical data channel in at least a first Transmission Time Interval (TTI).

The UE 106 decodes the received data and obtains a MAC PDU including the second control element. The second control element includes the second DCI. The second DCI is also referred to as a differential DCI. The second DCI includes a second HARQ process identity, a NDI and a RVI.

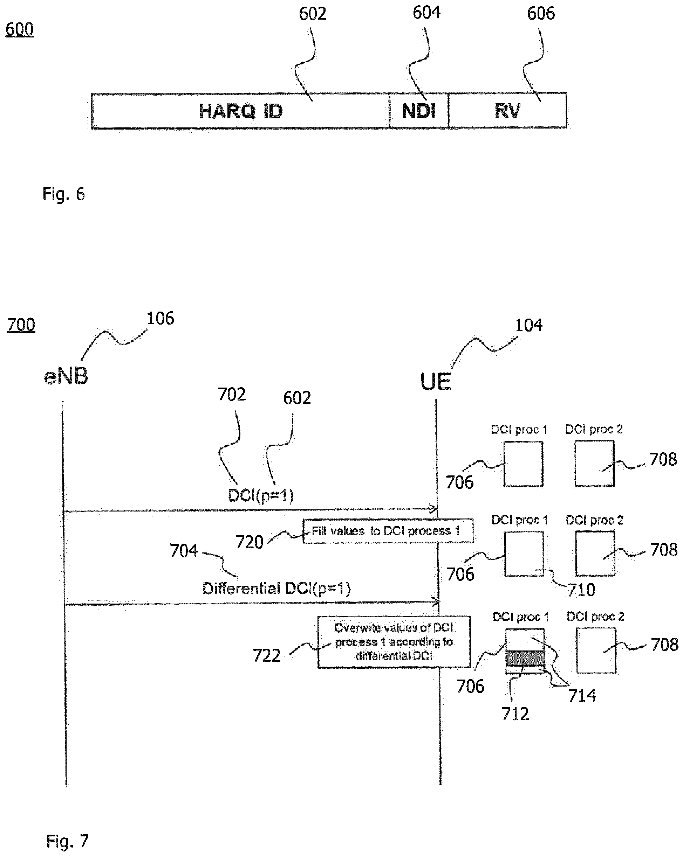

Fig. 6 schematically illustrates an embodiment for the second control element 600. The second control element is a differential-DCI MAC control element including the second DCI. The second DCI includes a 5-bit HARQ ID 602 indicating up to 32 HARQ processes, a 1-bit NDI flag 604 and a 2-bit RV indicator 606.

The differential DCI includes values for the transmission parameters in the proper subset, i.e. an incomplete set of transmission parameters. The UE 104, e.g., the second receive module 304, is configured to interpret the differential DCI as a second assignment in at least a second (e.g., next) TTI.

The proper subset is incomplete in the sense that not all required transmission parameters are specified by the second DCI. For the second TTI, the UE 104 obtains a complete second set of values for the transmission parameters by constructing a complete second set of transmission parameters specified by the union of values for the proper subset according to the second DCI and values for the complementary subset according to the first DCI.

In an alternative implementation, the second complete set of values for the transmission parameters is obtained by the UE 104 based on the first complete set of values for the transmission parameters according the first DCI and replacing the values of the transmission parameters to the respective values of the corresponding transmission parameters based on the incomplete second set of values according to the second DCI.

The second DCI may have a fixed-size. Fig. 6 illustrates an embodiment of the differential-DCI MAC control element 600 with fixed size for indicating up to 32 HARQ processes. As long as the one or more second assignments (i.e., assignments signaled by means of the second DCI) only differ (e.g., compared to the first assignment) in the HARQ process used by the corresponding second assignment (as indicated by the HARQ ID 602) and/or the NDI 604, the second DCI with fixed size can be used for the one or more second assignments.

In an extended embodiment, the second DCI is (e.g., selectively) indicative of a Modulation and Control Scheme (MCS) that enables the second DCI to indicate changes in modulation and/or code rate used in the one or more second assignments.

In a still further embodiment, the second DCI is of variable size. The second control element is structured with a possibility for including one or more out of the transmission parameters. E.g., a header of the second control element is indicative of the proper subset of transmission parameters.

Fig. 7 schematically illustrates a signaling sequence 700 between the RAN 102 (i.e., the at least one eNB 106) and the UE 104. The UE 104 receives the first DCI 702 in the step 502. The first DCI 702 includes a process indicator 602. The process indicator is indicative of a "DCI process 1" schematically indicated at reference sign 706. DCI processes may correspond to HARQ processes. The transmission parameters of the (complete) set 710 are assigned values according to the first DCI 702 for the "DCI process 1" at reference sign 706 in a substep 720 of the step 504.

At a later point in time, the UE 104 receives the second DCI 704 according to the step 504. The second DCI 704 also includes the process indicator that is indicative of the "DCI process 1". The second DCI 704 specifies values for the proper subset 712 of the transmission parameter for the "DCI process 1". The values for the set 710 relating to the transmission parameters of the proper subset 712 are overwritten with the values from the second DCI 704 in a substep 722 of the step 504. The values for the complementary set 714 remain unchanged.

In the embodiment illustrated in Fig. 7, the first DCI 702 and the second DCI 704 sent on the physical control channel include a DCI process identity 602. The UE 104 supports a number of DCI processes, as schematically illustrated at reference signs 706 and 708. Each DCI process is associated with a complete set of values stored at the device 300 for the transmission parameters that the UE 104 requires in order to receive data from the RAN 102 and/or transmit data to the RAN 102.

When the UE 104 receives the first DCI 702 and/or the second DCI 704 for a certain DCI process (e.g., indicated by the process identifier 602 included in the corresponding DCI), the transmission parameters of the indicated DCI process are assigned with the values specified by the corresponding DCI.

After a UE 104 has received the first DCI 702 for, e.g., "DCI process 1" at reference sign 706 in the step 502, the eNB 106 sends the second DCI 704 in the step 404. The second DCI 704 indicates "DCI process 1" and specifies differential transmission parameter values.

The UE 104 receiving the second DCI 704 in the step 504. The UE 104, e.g., the module 304 or 306, replaces the transmission parameter values for "DCI process 1" at reference sign 706 with the values indicated in the second DCI 704. The UE 104 thus overwrites the values for the transmission parameters in the set 712 based on the second DCI 704 for the "DCI process 1" at reference sign 706, while keeping the values for the other transmission parameters 714 not indicated in the second DCI 704.

In a variant of any one of the embodiments, the second DCI 704 indicates (or by convention relates to) a temporary overwrite of the values for the indicated transmission parameters (i.e. for the proper subset 712). The temporary overwrite may apply for a single reception (downlink implementation) or a single transmission (uplink implementation).

As an optional enhancement of the variant, overwriting values without a temporal limit (which may be referred to as a permanent update or a semi-permanent update) is achieved by signaling the (complete) first DCI 702. Alternatively, the second DCI 704 results in the permanent update or the semi-permanent update.

In any one of above embodiments, each process can be associated with different traffic types and/or modes of transmissions. The traffic type and/or the transmission mode may be specified by the set of transmission parameters and/or the values for the set of transmission parameters associated with the corresponding process. E.g., the device 300 and/or the UE 104 may be configured to store a first transmission parameter set for a first process for rank-1 transmissions, a second transmission parameter set for a second process for rank-2 transmissions, etc.

Example values for the second DCI are described. For illustration and without limitation thereto, the second DCI specifies a DCI process indicator (e.g., one DCI process for each HARQ process) and a 3-bit differential indicator. The differential indicator is indicative of whether the assignment relates to a new transmission or a re-transmission. The differential indicator is further indicative of whether the new transmission is with or without MCS adjustment. Below Table specifies the example values for the differential indicator.

| Differential Indicator | Description |
|---|---|
| '000' | Re-transmission and RV=0; other transmission parameters not altered |
| '001' | Re-transmission and RV=1; other transmission parameters not altered |
| '010' | Re-transmission and RV=2; other transmission parameters not altered |
| '011' | Re-transmission and RV=3; other transmission parameters not altered |
| '100' | New transmission, i.e. toggled NDI, RV=0; other transmission parameters not altered |
| '101' | New transmission, i.e. toggled NDI, RV=0 and decreased MCS by 1; other transmission parameters not altered |
| '110' | New transmission, i.e. toggled NDI, RV=0 and decreased MCS by 2; other transmission parameters not altered |
| '111' | New transmission, i.e. toggled NDI, RV=0 and increased MCS by 1; other transmission parameters not altered |

In any of above embodiments, the communications 406 and 506 may relate to uplink or downlink. E.g., the first assignment according to the first DCI 702 and/or the second assignment according to the second DCI 704 may relate to the downlink (i.e., the UE 104 decodes an assigned downlink transmission) using the obtained values for the transmission parameters. Alternatively or in addition, the first assignment and/or the second assignment may relate to the uplink (i.e., the UE 104 performs an assigned uplink transmission) using the obtained values for the transmission parameters.

Furthermore, in any of above embodiments, after initializing the values by signaling the first DCI 702, the signaling sequence 700 may include any sequence in any order of further first DCIs 702 and/or second DCIs 704.

As has become apparent from above description of exemplary embodiments, the technique allows configuring values for transmission parameters in a wireless system with reduced control signaling. A control signaling bandwidth is efficiently used for synchronizing the parameter values at radio access network and user equipment. The signaling allows updating the values for specific UEs and/or specific processes for each UE.

Many advantages of the present invention will be fully understood from the foregoing description, and it will be apparent that various changes may be made in the form, construction and arrangement of the modules and devices without departing from the scope of the invention and/or without sacrificing all of its advantages. Since the invention can be varied in many ways, it will be recognized that the invention is limited only by the scope of the following claims.

## Claims

1. A method (400) of sending downlink control information, DCI, from a radio access network (102) to a user equipment, UE (104), the method comprising or triggering the steps of:
sending (402) a first control element including first DCI (702) to the UE (104), wherein the first DCI (702) includes values specifying a set (710) of transmission parameters;
sending (404) a second control element including second DCI (704) to the UE (104), wherein the second DCI (704) includes values specifying a subset (712) of the set (710); and
communicating (406) with the UE (104) according to the set (710) of transmission parameters, wherein the values included in the first DCI (702) specify the transmission parameters (714) not in the subset (712), and wherein the values included in the second DCI (704) specify the transmission parameters in the subset (712); wherein
the first DCI and the second DCI are indicative of one or more HARQ processes among a plurality of HARQ processes performed for the UE;
the second DCI further includes a differential indicator indicative of whether the second DCI relates to a re-transmission or a new transmission; and
a portion of the differential indicator is indicative of a modulation and coding scheme in case of a new transmission.

2. The method of claim 1, wherein the first control element is sent in a first packet data unit, PDU, and the second control element is sent in a second PDU.

3. The method of claim 1 or 2, wherein the transmission parameters in the set are initialized at the radio access network (102) according to the values included in the first DCI (702) upon sending the first DCI (702).

4. The method of any one of claims 1 to 3, wherein the transmission parameters in the subset (712) are changed at the radio access network (102) according to the values included in the second DCI (704) upon sending the second DCI (704).

5. The method of any one of claims 1 to 4, wherein the first DCI (702) is effective to the communication (406) from a first transmission time interval, TTI, and wherein the second DCI (704) is effective to the communication (406) from a second TTI later than the first TTI.

6. The method of any one of claims 1 to 5, wherein the values included in the first DCI (702) for the transmission parameters (714) not in the subset (712) are effective to the communication (406) until a further first DCI (702) including values specifying the set (710) of the transmission parameters is sent.

7. The method of any one of claims 1 to 6, wherein the values included in the first DCI (702) for the transmission parameters in the subset (712) are effective to the communication (406) until the second DCI (704) including values specifying the subset (712) of the transmission parameters is sent.

8. The method of any one of claims 1 to 7, wherein the values included in the second DCI (704) for the transmission parameters in the subset (712) are effective to the communication (406) until a further first DCI (702) including values specifying the set (710) of the transmission parameters is sent and/or until a further second DCI (704) including values specifying the subset (712) or another subset of the transmission parameters is sent.

9. The method of claim 1, wherein the portion of the differential indicator is indicative of a redundancy version, RV, in case of the re-transmission.

10. The method of any one of claims 1 to 9, wherein the step of communicating (406) includes:
decoding and/or demodulating a data block received from the UE (104) according to the set (710) of transmission parameters, wherein the values included in the first DCI (702) specify the transmission parameters (714) not in the subset, and wherein the values included in the second DCI (704) specify the transmission parameters in the subset (712).

11. The method of any one of claims 1 to 10, wherein the step of communicating (406) includes:
encoding and/or modulating a data block to be transmitted to the UE (104) according to the set (710) of transmission parameters, wherein the values included in the first DCI (702) specify the transmission parameters (714) not in the subset, and wherein the values included in the second DCI (704) specify the transmission parameters in the subset (712).

12. A method (500) of receiving downlink control information, DCI, from a radio access network (102) at a user equipment, UE (104), the method comprising or triggering the steps of:
receiving (502) a first control element including first DCI (702) from the radio access network (102), wherein the first DCI (702) includes values specifying a set (710) of transmission parameters;
receiving (504) a second control element including second DCI (704) from the radio access network (102), wherein the second DCI (704) includes values specifying a subset (712) of the set (710); and
communicating (506) with the radio access network (102) according to the set (710) of transmission parameters, wherein the values included in the first DCI (702) specify the transmission parameters (714) not in the subset, and wherein the values included in the second DCI (704) specify the transmission parameters in the subset (712); wherein
the first DCI and the second DCI are indicative of one or more HARQ processes among a plurality of HARQ processes performed for the UE;
the second DCI further includes a differential indicator indicative of whether the second DCI relates to a re-transmission or a new transmission; and
a portion of the differential indicator is indicative of a modulation and coding scheme in case of a new transmission.

13. A device (200) for sending downlink control information, DCI, from a radio access network (102) to a user equipment, UE (104), the device being configured to perform or trigger the steps of:
sending a first control element including first DCI to the UE, wherein the first DCI includes values specifying a set of transmission parameters;
sending a second control element including second DCI to the UE, wherein the second DCI includes values specifying a subset of the set; and
communicating with the UE according to the set of transmission parameters, wherein the values included in the first DCI specify the transmission parameters not in the subset, and wherein the values included in the second DCI specify the transmission parameters in the subset;
wherein the first DCI and the second DCI are indicative of one or more HARQ processes among a plurality of HARQ processes performed for the UE;
the second DCI further includes a differential indicator indicative of whether the second DCI relates to a re-transmission or a new transmission; and
a portion of the differential indicator is indicative of a modulation and coding scheme in case of a new transmission.

14. A UE (104) for receiving downlink control information, DCI, from a radio access network (102), the UE being configured to perform or trigger the steps of:
receiving (502) a first control element including first DCI (702) from the radio access network (102), wherein the first DCI (702) includes values specifying a set (710) of transmission parameters;
receiving (504) a second control element including second DCI (704) from the radio access network (102), wherein the second DCI (704) includes values specifying a proper subset (712) of the set (710); and
communicating (506) with the radio access network (102) according to the set (710) of transmission parameters, wherein the values included in the first DCI (702) specify the transmission parameters (714) not in the subset, and wherein the values included in the second DCI (704) specify the transmission parameters in the subset (712);
wherein
the first DCI and the second DCI are indicative of one or more HARQ processes among a plurality of HARQ processes performed for the UE;
the second DCI further includes a differential indicator indicative of whether the second DCI relates to a re-transmission or a new transmission; and
a portion of the differential indicator is indicative of a modulation and coding scheme in case of a new transmission.

## Patentansprüche

1. Verfahren (400) zum Senden von Downlink-Steuerinformationen, DCI, von einem Funkzugangsnetz (102) an eine Benutzereinrichtung, UE (104), wobei das Verfahren die Schritte umfasst oder auslöst:
Senden (402) eines ersten Steuerelements, einschließlich einer ersten DCI (702), an die UE (104), wobei die erste DCI (702) Werte einschließt, die einen Satz (710) von Übertragungsparametern angeben;
Senden (404) eines zweiten Steuerelements, einschließlich einer zweiten DCI (704), an die UE (104), wobei die zweite DCI (704) Werte einschließt, die einen Teilsatz (712) des Satzes (710) angeben; und
Kommunizieren (406) mit der UE (104) gemäß dem Satz (710) von Übertragungsparametern, wobei die in der ersten DCI (702) eingeschlossenen Werte die Übertragungsparameter (714) angeben, die nicht in dem Teilsatz (712) enthalten sind, und wobei die in der zweiten DCI (704) eingeschlossenen Werte die Übertragungsparameter angeben, die in dem Teilsatz (712) enthalten sind; wobei
die erste DCI und die zweite DCI einen oder mehrere HARQ-Prozesse unter einer Vielzahl von HARQ-Prozessen, die für die UE durchgeführt werden, angeben;
die zweite DCI ferner einen Differentialindikator einschließt, der angibt, ob sich die zweite DCI auf eine erneute Übertragung oder eine neue Übertragung bezieht; und
ein Abschnitt des Differentialindikators ein Modulations- und Codierungsschema im Fall einer neuen Übertragung angibt.

2. Verfahren nach Anspruch 1, wobei das erste Steuerelement in einer ersten Paketdateneinheit, PDU, und das zweite Steuerelement in einer zweiten PDU gesendet wird.

3. Verfahren nach Anspruch 1 oder 2, wobei die Übertragungsparameter in dem Satz nach dem Senden der ersten DCI (702) in dem Funkzugangsnetz (102) gemäß den in der ersten DCI (702) eingeschlossenen Werten initialisiert werden.

4. Verfahren nach einem der Ansprüche 1 bis 3, wobei die Übertragungsparameter in dem Teilsatz (712) nach dem Senden der zweiten DCI (704) in dem Funkzugangsnetz (102) gemäß den in der zweiten DCI (704) eingeschlossenen Werten geändert werden.

5. Verfahren nach einem der Ansprüche 1 bis 4, wobei die erste DCI (702) für die Kommunikation (406) aus einem ersten Übertragungszeitintervall, TTI, wirksam ist und wobei die zweite DCI (704) für die Kommunikation (406) aus einem zweiten TTI, das später als das erste TTI ist, wirksam ist.

6. Verfahren nach einem der Ansprüche 1 bis 5, wobei die in der ersten DCI (702) eingeschlossenen Werte für die Übertragungsparameter (714), die nicht in dem Teilsatz (712) enthalten sind, für die Kommunikation (406) wirksam sind, bis eine weitere erste DCI (702), die Werte einschließt, die den Satz (710) der Übertragungsparameter angeben, gesendet wird.

7. Verfahren nach einem der Ansprüche 1 bis 6, wobei die in der ersten DCI (702) eingeschlossenen Werte für die Übertragungsparameter, die in dem Teilsatz (712) enthalten sind, für die Kommunikation (406) wirksam sind, bis die zweite DCI (704), die Werte einschließt, die den Teilsatz (712) der Übertragungsparameter angeben, gesendet wird.

8. Verfahren nach einem der Ansprüche 1 bis 7, wobei die in der zweiten DCI (704) eingeschlossenen Werte für die Übertragungsparameter, die in dem Teilsatz (712) enthalten sind, für die Kommunikation (406) wirksam sind, bis eine weitere erste DCI (702), die Werte einschließt, die den Satz (710) der Übertragungsparameter angeben, gesendet wird, und/oder bis eine weitere zweite DCI (704), die Werte einschließt, die den Teilsatz (712) oder einen anderen Teilsatz der Übertragungsparameter angeben, gesendet wird.

9. Verfahren nach Anspruch 1, wobei der Abschnitt des Differentialindikators eine Redundanzversion, RV, im Fall der erneuten Übertragung angibt.

10. Verfahren nach einem der Ansprüche 1 bis 9, wobei der Schritt des Kommunizierens (406) einschließt:
Decodieren und/oder Demodulieren eines von der UE (104) empfangenen Datenblocks gemäß dem Satz (710) von Übertragungsparametern, wobei die in der ersten DCI (702) eingeschlossenen Werte die Übertragungsparameter (714) angeben, die nicht in dem Teilsatz enthalten sind, und wobei die in der zweiten DCI (704) eingeschlossenen Werte die Übertragungsparameter angeben, die in dem Teilsatz (712) enthalten sind.

11. Verfahren nach einem der Ansprüche 1 bis 10, wobei der Schritt des Kommunizierens (406) einschließt:
Codieren und/oder Modulieren eines an die UE (104) zu übertragenden Datenblocks gemäß dem Satz (710) von Übertragungsparametern, wobei die in der ersten DCI (702) eingeschlossenen Werte die Übertragungsparameter (714) angeben, die nicht in dem Teilsatz enthalten sind, und wobei die in der zweiten DCI (704) eingeschlossenen Werte die Übertragungsparameter angeben, die in dem Teilsatz (712) enthalten sind.

12. Verfahren (500) zum Empfangen von Downlink-Steuerinformationen, DCI, von einem Funkzugangsnetz (102) an einer Benutzereinrichtung, UE, (104), wobei das Verfahren die Schritte umfasst oder auslöst:
Empfangen (502) eines ersten Steuerelements, einschließlich einer ersten DCI (702), von dem Funkzugangsnetz (102), wobei die erste DCI (702) Werte einschließt, die einen Satz (710) von Übertragungsparametern angeben;
Empfangen (504) eines zweiten Steuerelements, einschließlich einer zweiten DCI (704), von dem Funkzugangsnetz (102), wobei die zweite DCI (704) Werte einschließt, die einen Teilsatz (712) des Satzes (710) angeben; und
Kommunizieren (506) mit dem Funkzugangsnetz (102) gemäß dem Satz (710) von Übertragungsparametern, wobei die in der ersten DCI (702) eingeschlossenen Werte die Übertragungsparameter (714) angeben, die nicht in dem Teilsatz enthalten sind, und wobei die in der zweiten DCI (704) eingeschlossenen Werte die Übertragungsparameter angeben, die in dem Teilsatz (712) enthalten sind; wobei
die erste DCI und die zweite DCI einen oder mehrere HARQ-Prozesse unter einer Vielzahl von HARQ-Prozessen, die für die UE durchgeführt werden, angeben;
die zweite DCI ferner einen Differentialindikator einschließt, der angibt, ob sich die zweite DCI auf eine erneute Übertragung oder eine neue Übertragung bezieht; und
ein Abschnitt des Differentialindikators ein Modulations- und Codierungsschema im Fall einer neuen Übertragung angibt.

13. Vorrichtung (200) zum Senden von Downlink-Steuerinformationen, DCI, von einem Funkzugangsnetz (102) an eine Benutzereinrichtung, UE (104), wobei die Vorrichtung konfiguriert ist zum Durchführen oder Auslösen der Schritte:
Senden eines ersten Steuerelements, einschließlich einer ersten DCI, an die UE, wobei die erste DCI Werte einschließt, die einen Satz von Übertragungsparametern angeben;
Senden eines zweiten Steuerelements, einschließlich einer zweiten DCI, an die UE, wobei die zweite DCI Werte einschließt, die einen Teilsatz des Satzes angeben; und
Kommunizieren mit der UE gemäß dem Satz von Übertragungsparametern, wobei die in der ersten DCI eingeschlossenen Werte die Übertragungsparameter angeben, die nicht in dem Teilsatz enthalten sind, und wobei die in der zweiten DCI eingeschlossenen Werte die Übertragungsparameter angeben, die in dem Teilsatz enthalten sind;
wobei die erste DCI und die zweite DCI einen oder mehrere HARQ-Prozesse unter einer Vielzahl von HARQ-Prozessen, die für die UE durchgeführt werden, angeben;
die zweite DCI ferner einen Differentialindikator einschließt, der angibt, ob sich die zweite DCI auf eine erneute Übertragung oder eine neue Übertragung bezieht; und
ein Abschnitt des Differentialindikators ein Modulations- und Codierungsschema im Fall einer neuen Übertragung angibt.

14. UE (104) zum Empfangen von Downlink-Steuerinformationen, DCI, von einem Funkzugangsnetz (102), wobei die UE konfiguriert ist zum Durchführen oder Auslösen der Schritte:
Empfangen (502) eines ersten Steuerelements, einschließlich einer ersten DCI (702), von dem Funkzugangsnetz (102), wobei die erste DCI (702) Werte einschließt, die einen Satz (710) von Übertragungsparametern angeben;
Empfangen (504) eines zweiten Steuerelements, einschließlich einer zweiten DCI (704), von dem Funkzugangsnetz (102), wobei die zweite DCI (704) Werte einschließt, die einen geeigneten Teilsatz (712) des Satzes (710) angeben; und
Kommunizieren (506) mit dem Funkzugangsnetz (102) gemäß dem Satz (710) von Übertragungsparametern, wobei die in der ersten DCI (702) eingeschlossenen Werte die Übertragungsparameter (714) angeben, die nicht in dem Teilsatz enthalten sind, und wobei die in der zweiten DCI (704) eingeschlossenen Werte die Übertragungsparameter angeben, die in dem Teilsatz (712) enthalten sind;
wobei
die erste DCI und die zweite DCI einen oder mehrere HARQ-Prozesse unter einer Vielzahl von HARQ-Prozessen, die für die UE durchgeführt werden, angeben;
die zweite DCI ferner einen Differentialindikator einschließt, der angibt, ob sich die zweite DCI auf eine erneute Übertragung oder eine neue Übertragung bezieht; und
ein Abschnitt des Differentialindikators ein Modulations- und Codierungsschema im Fall einer neuen Übertragung angibt.

## Revendications

1. Procédé (400) d'envoi d'informations de commande de liaison descendante, DCI, depuis un réseau d'accès radio (102) vers un équipement utilisateur, UE (104), le procédé comprenant ou déclenchant les étapes consistant à :
envoyer (402) un premier élément de commande incluant des premières DCI (702) à l'UE (104), dans lequel les premières DCI (702) incluent des valeurs spécifiant un ensemble (710) de paramètres de transmission ;
envoyer (404) un deuxième élément de commande incluant des deuxièmes DCI (704) à l'UE (104), dans lequel les deuxièmes DCI (704) incluent des valeurs spécifiant un sous-ensemble (712) de l'ensemble (710) ; et
communiquer (406) avec l'UE (104) selon l'ensemble (710) de paramètres de transmission, dans lequel les valeurs incluses dans les premières DCI (702) spécifient les paramètres de transmission (714) ne figurant pas dans le sous-ensemble (712), et dans lequel les valeurs incluses dans les deuxièmes DCI (704) spécifient les paramètres de transmission dans le sous-ensemble (712) ; dans lequel
les premières DCI et les deuxièmes DCI sont indicatives d'un ou plusieurs processus HARQ parmi une pluralité de processus HARQ mis en œuvre pour l'UE ;
les deuxièmes DCI incluent en outre un indicateur différentiel indiquant si les deuxièmes DCI se rapportent à une re-transmission ou à une nouvelle transmission ; et
une partie de l'indicateur différentiel est indicative d'un schéma de modulation et de codage en cas de nouvelle transmission.

2. Procédé selon la revendication 1, dans lequel le premier élément de commande est envoyé dans une première unité de données de paquet, PDU, et le deuxième élément de commande est envoyé dans une deuxième PDU.

3. Procédé selon la revendication 1 ou 2, dans lequel les paramètres de transmission dans l'ensemble sont initialisés au niveau du réseau d'accès radio (102) selon les valeurs incluses dans les premières DCI (702) lors de l'envoi des premières DCI (702).

4. Procédé selon l'une quelconque des revendications 1 à 3, dans lequel les paramètres de transmission dans le sous-ensemble (712) sont changés au niveau du réseau d'accès radio (102) selon les valeurs incluses dans les deuxièmes DCI (704) lors de l'envoi des deuxièmes DCI (704).

5. Procédé selon l'une quelconque des revendications 1 à 4, dans lequel les premières DCI (702) sont effectives pour la communication (406) à partir d'un premier intervalle de temps de transmission, TTI, et dans lequel les deuxièmes DCI (704) sont effectives pour la communication (406) à partir d'un deuxième TTI postérieur au premier TTI.

6. Procédé selon l'une quelconque des revendications 1 à 5, dans lequel les valeurs incluses dans les premières DCI (702) pour les paramètres de transmission (714) ne figurant pas dans le sous-ensemble (712) sont effectives pour la communication (406) jusqu'à ce que d'autres premières DCI (702) incluant des valeurs spécifiant l'ensemble (710) des paramètres de transmission soient envoyées.

7. Procédé selon l'une quelconque des revendications 1 à 6, dans lequel les valeurs incluses dans les premières DCI (702) pour les paramètres de transmission dans le sous-ensemble (712) sont effectives pour la communication (406) jusqu'à ce que les deuxièmes DCI (704) incluant des valeurs spécifiant le sous-ensemble (712) des paramètres de transmission soient envoyées.

8. Procédé selon l'une quelconque des revendications 1 à 7, dans lequel les valeurs incluses dans les deuxièmes DCI (704) pour les paramètres de transmission dans le sous-ensemble (712) sont effectives pour la communication (406) jusqu'à ce que d'autres premières DCI (702) incluant des valeurs spécifiant l'ensemble (710) des paramètres de transmission soient envoyées et/ou jusqu'à ce que d'autres deuxièmes DCI (704) incluant des valeurs spécifiant le sous-ensemble (712) ou un autre sous-ensemble des paramètres de transmission soient envoyées.

9. Procédé selon la revendication 1, dans lequel la partie de l'indicateur différentiel est indicative d'une version de redondance, RV, en cas de re-transmission.

10. Procédé selon l'une quelconque des revendications 1 à 9, dans lequel l'étape de communication (406) inclut :
le décodage et/ou la démodulation d'un bloc de données reçu de l'UE (104) selon l'ensemble (710) de paramètres de transmission, dans lequel les valeurs incluses dans les premières DCI (702) spécifient les paramètres de transmission (714) ne figurant pas dans le sous-ensemble, et dans lequel les valeurs incluses dans les deuxièmes DCI (704) spécifient les paramètres de transmission dans le sous-ensemble (712).

11. Procédé selon l'une quelconque des revendications 1 à 10, dans lequel l'étape de communication (406) inclut :
le codage et/ou la modulation d'un bloc de données à transmettre à l'UE (104) selon l'ensemble (710) de paramètres de transmission, dans lequel les valeurs incluses dans les premières DCI (702) spécifient les paramètres de transmission (714) ne figurant pas dans le sous-ensemble, et dans lequel les valeurs incluses dans les deuxièmes DCI (704) spécifient les paramètres de transmission dans le sous-ensemble (712).

12. Procédé (500) de réception d'informations de commande de liaison descendante, DCI, depuis un réseau d'accès radio (102) au niveau d'un équipement utilisateur, UE (104), le procédé comprenant ou déclenchant les étapes consistant à :
recevoir (502) un premier élément de commande incluant des premières DCI (702) depuis le réseau d'accès radio (102), dans lequel les premières DCI (702) incluent des valeurs spécifiant un ensemble (710) de paramètres de transmission ; recevoir (504) un deuxième élément de commande incluant des deuxièmes DCI (704) depuis le réseau d'accès radio (102), dans lequel les deuxièmes DCI (704) incluent des valeurs spécifiant un sous-ensemble (712) de l'ensemble (710) ; et communiquer (506) avec le réseau d'accès radio (102) selon l'ensemble (710) de paramètres de transmission, dans lequel les valeurs incluses dans les premières DCI (702) spécifient les paramètres de transmission (714) ne figurant pas dans le sous-ensemble, et dans lequel les valeurs incluses dans les deuxièmes DCI (704) spécifient les paramètres de transmission dans le sous-ensemble (712) ; dans lequel
les premières DCI et les deuxièmes DCI sont indicatives d'un ou plusieurs processus HARQ parmi une pluralité de processus HARQ mis en œuvre pour l'UE ;
les deuxièmes DCI incluent en outre un indicateur différentiel indiquant si les deuxièmes DCI se rapportent à une re-transmission ou à une nouvelle transmission ; et
une partie de l'indicateur différentiel est indicative d'un schéma de modulation et de codage en cas de nouvelle transmission.

13. Dispositif (200) pour envoyer des informations de commande de liaison descendante, DCI, depuis un réseau d'accès radio (102) vers un équipement utilisateur, UE (104), le dispositif étant configuré pour mettre en œuvre ou déclencher les étapes consistant à :
envoyer un premier élément de commande incluant des premières DCI à l'UE, dans lequel les premières DCI incluent des valeurs spécifiant un ensemble de paramètres de transmission ;
envoyer un deuxième élément de commande incluant des deuxièmes DCI à l'UE, dans lequel les deuxièmes DCI incluent des valeurs spécifiant un sous-ensemble de l'ensemble ; et
communiquer avec l'UE selon l'ensemble de paramètres de transmission, dans lequel les valeurs incluses dans les premières DCI spécifient les paramètres de transmission ne figurant pas dans le sous-ensemble, et dans lequel les valeurs incluses dans les deuxièmes DCI spécifient les paramètres de transmission dans le sous-ensemble ;
dans lequel les premières DCI et les deuxièmes DCI sont indicatives d'un ou plusieurs processus HARQ parmi une pluralité de processus HARQ mis en œuvre pour l'UE ;
les deuxièmes DCI incluent en outre un indicateur différentiel indiquiant si les deuxièmes DCI se rapportent à une re-transmission ou à une nouvelle transmission ; et
une partie de l'indicateur différentiel est indicative d'un schéma de modulation et de codage en cas de nouvelle transmission.

14. UE (104) pour recevoir des informations de commande de liaison descendante, DCI, depuis un réseau d'accès radio (102), l'UE étant configuré pour mettre en œuvre ou déclencher les étapes consistant à :
recevoir (502) un premier élément de commande incluant des premières DCI (702) depuis le réseau d'accès radio (102), dans lequel les premières DCI (702) incluent des valeurs spécifiant un ensemble (710) de paramètres de transmission ;
recevoir (504) un deuxième élément de commande incluant des deuxièmes DCI (704) depuis le réseau d'accès radio (102), dans lequel les deuxièmes DCI (704) incluent des valeurs spécifiant un sous-ensemble adéquat (712) de l'ensemble (710) ; et
communiquer (506) avec le réseau d'accès radio (102) selon l'ensemble (710) de paramètres de transmission, dans lequel les valeurs incluses dans les premières DCI (702) spécifient les paramètres de transmission (714) ne figurant pas dans le sous-ensemble, et dans lequel les valeurs incluses dans les deuxièmes DCI (704) spécifient les paramètres de transmission dans le sous-ensemble (712) ;
dans lequel
les premières DCI et les deuxièmes DCI sont indicatives d'un ou plusieurs processus HARQ parmi une pluralité de processus HARQ mis en œuvre pour l'UE ;
les deuxièmes DCI incluent en outre un indicateur différentiel indiquant si les deuxièmes DCI se rapportent à une re-transmission ou à une nouvelle transmission ; et
une partie de l'indicateur différentiel est indicative d'un schéma de modulation et de codage en cas de nouvelle transmission.
